# EUROPEAN PATENT APPLICATION

(11) **EP 1 419 827 A2**
(43) Date of publication of application: **19.05.2004**
(21) Application number: 03026071.5
(22) Date of filing: 12.11.2003
(51) Int. Cl.: B05C 5/02

(54) **Extrusion type nozzle and coating apparatus using the same**

(30) Priority: 12.11.2002 JP 2002328596
(71) Applicant: MATSUSHITA ELECTRIC INDUSTRIAL CO., LTD., Kadoma-shi, Osaka 571-8501 (JP)
(72) Inventor: Kuromiya, Takao, Kadoma-shi Osaka 571-0058 (JP)
(74) Representative: Grünecker, Kinkeldey, Stockmair & Schwanhäusser Anwaltssozietät

(57) **Abstract**

An extrusion type nozzle includes a block having therein a manifold for distributing liquid along a coating width, a slit for allowing the liquid distributed in the manifold to pass through the slit (5,6), and a discharge outlet (8) for discharging the liquid from the slit (5,6). The slit includes a first portion (5) and a second portion (6) provided closer to the discharge outlet (8) than the first portion (5). The nozzle further includes a first forming member (3) for forming a wall of the first portion of the slit (5). The first forming member (3) is displaceable to change a gap of the first portion of the slit (5). The nozzle can apply plural types of liquid having viscosities different from each other uniformly and liquid having a viscosity changing a lot.

## Description

### Field of the Invention

The present invention relates to an extrusion type nozzle for applying liquid onto an object running continuously, for example, for manufacturing magnetic recording tapes, adhesive tapes, photographic printing papers, offset printing sheets, electrical cell electrodes, fuel cell catalyst layers, dielectric layers in the front side of a plasma display panel, and to a coating apparatus including the nozzle.

### Background of the Invention

An extrusion type nozzle which is used for applying liquid onto an object running continuously and is arranged for manufacturing magnetic recording tapes, adhesive tapes, photographic printing papers, offset printing sheets, electrical cell electrodes, fuel cell catalyst layers, dielectric layers in the front side of a plasma display panel, or the like. A conventional extrusion type nozzle includes a manifold for dispensing the liquid throughout a coating width and a slit for rectifying and discharging the liquid in the manifold. If the liquid has a viscosity, a pressure in the manifold is not uniform along the coating width due to a pressure loss. Accordingly, in the conventional extrusion type nozzle having the discharging slit having an opening length uniform along the coating width, the liquid at regions having higher pressures is applied more than that at regions having lower pressures. The liquid is not accordingly applied uniformly along the coating width.

Following methods for allowing the liquid to be applied uniform throughout the coating width are known.

Japanese Patent Laid-Open Publication No.1-180266 discloses that a slit has a small gap or a large length in the direction of the application of the liquid. This arrangement increases a pressure in a manifold for allowing the liquid to be applied uniformly along the coating width.

This method causes a nozzle itself to deform due to a high pressure of the liquid in it, hence preventing the liquid from being applied uniformly. The nozzle may have an increased wall thickness to increase its rigidity for reducing its deformation. This method, however, increases a cost of production and a weight of the nozzle, thus reducing its production efficiency.

Japanese Patent Laid-Open Publication No.6-335653 discloses that a slit has its length in the direction of application is decreased by tilting linearly or arcuately from a side of application to the opposite side for allowing liquid to be applied uniformly along the coating width.

This method is effective for a particular type of liquid, but requires nozzles having specific shapes corresponding to viscosities of particular types of liquid. If the viscosity of the liquid varies among lots or with time, the nozzle can hardly apply the liquid uniformly.

Japanese Patent Laid-Open Publication No. 10-5660 discloses that a slit in a nozzle is partially configured by an exchangeable member which can be replaced by another member to change both the application length and the width of the slit. Various types of liquid having different viscosities can be applied uniformly with a single nozzle.

In this method, plural members allow various types of the liquid having the different viscosities to be applied uniformly relatively inexpensively. However, if the liquid varies among lots or with time, the liquid can be hardly applied uniformly.

Another method for applying the liquid uniformly is known in which plural mechanisms for changing the shape of a discharging outlet or lip of a slit along the coating width according to the amount of applied liquid.

In this method, however, the mechanisms are required to set appropriately for changing the shape which may be determined by a feedback control mechanism, thus being significantly intricate and expensive. Further, it takes a considerable length of time to settle the amount of the liquid within a desired target range.

### Summary of the Invention

An extrusion type nozzle includes a block having therein a manifold for distributing liquid along a coating width, a slit for allowing the liquid distributed in the manifold to pass through the slit, and a discharge outlet for discharging the liquid from the slit. The slit includes a first portion and a second portion provided closer to the discharge outlet than the first portion. The nozzle further includes a first forming member for forming a wall of the first portion of the slit. The first forming member is displaceable to change a gap of the first portion of the slit.

The nozzle can apply plural types of liquid having viscosities different from each other uniformly and liquid having a viscosity changing a lot.

### Brief Description of the Drawings

Fig. 1 is a cross sectional side view of an extrusion type nozzle according to Exemplary Embodiment 1 of the present invention.
Fig. 2 is a perspective view of a main block of the extrusion type nozzle according to Embodiment 1.
Fig. 3 is a cross sectional side view of another extrusion type nozzle according to Embodiment 1.
Fig. 4 is a perspective view of a further extrusion type nozzle according to Embodiment 1.
Fig. 5 is a block diagram of a coating apparatus according to Embodiment 1.
Fig. 6 is a cross sectional side view of an extrusion type nozzle according to Exemplary Embodiment 2 of the invention.
Fig. 7 is a cross sectional side view of an extrusion type nozzle according to Exemplary Embodiment 3 of the invention.
Fig. 8 is a perspective view of a main block of the extrusion type nozzle according to Embodiment 3.

### Detail Description of the Preferred Embodiments

### Exemplary Embodiment 1

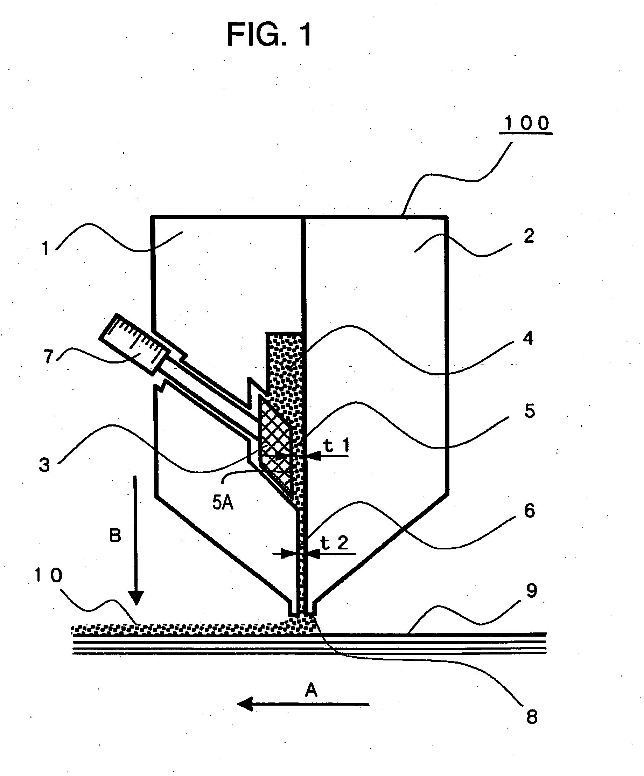

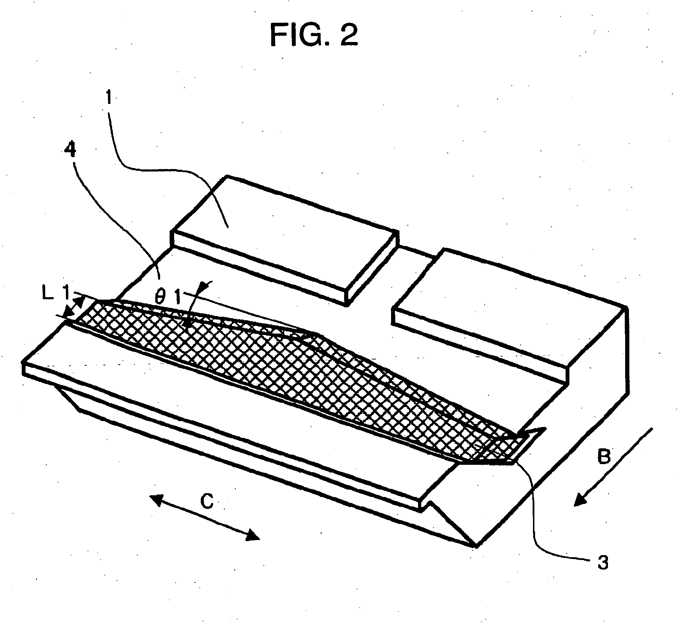

Fig. 1 is a cross sectional view of an extrusion type nozzle 100 according to Exemplary Embodiment 1 of the present invention. Fig. 2 is a perspective view of a main block 1 of the extrusion type nozzle 100 shown in Fig. 1.

Liquid introduced into the nozzle 100 is pumped out at a constant speed by a pump, such as a quantitative pump for dispensing liquid in a manifold 4 along a coating width C, as shown in Fig. 2. The liquid is carried through a manifold-side slit 5 and a lip-side slit 6 and is discharged from a lip 8, an outlet, on an object 9 to be coated with a resultant coating 10 produced along an applying direction A.

The nozzle 100 includes the main block 1, a main block 2, and a manifold-side-slit-forming member 3 for changing a gap of the manifold-side slit 5. The forming member 3 forms a wall 5A at a side of the manifold-side slit 5. The lip-side slit 6 extends between the manifold-side slit 5 and the lip 8.

The extrusion type nozzle 100 is equipped with a displacing mechanism 7 for displacing the forming member 3. The displacing mechanism 7 displaces the forming member 3 to change a gap t1 of the manifold-side slit 5, thus changing an internal pressure in the nozzle 100 for changing an amount of the applied liquid along the coating width C. An amount of the displacement of the forming member 3 is adjusted appropriately to apply the liquid uniformly. If the gap t1 is narrowed, the amount of the applied liquid increases at both ends of the coating width more than a center of the width. If the gap t1 is widened, the amount of the applied liquid increases at the center more than at the ends.

The forming member 3 may be exchangeable. The displacing mechanism 7 for displacing the forming member 3 may be implemented by a differential screw, a heat bolt, or a piezoelectric device, but is not limited to them.

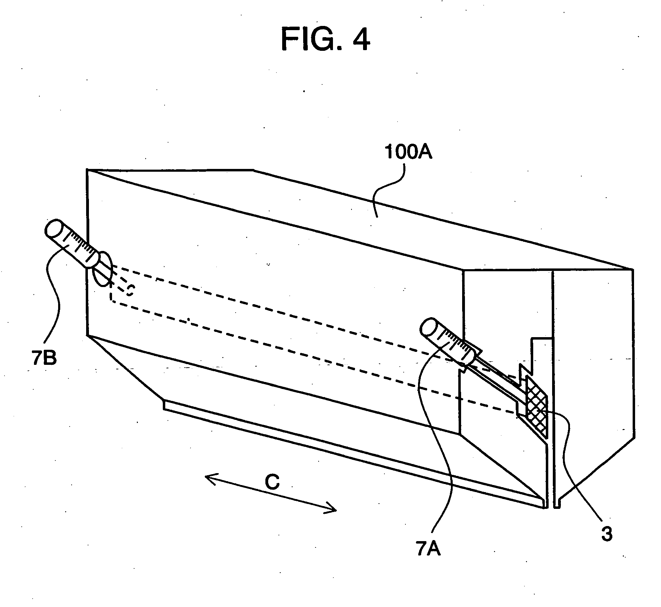

The forming member 3 may be displaced to tilt along the coating width C. Fig. 4 is a perspective view of another extrusion type nozzle 100A according to Embodiment 1 arranged to tilt. The nozzle 100A includes displacing mechanisms 7A and 7B provided along the coating width C for displacing the forming member 3. The forming member 3 can be tilted along the coating width C when the displacing mechanisms 7A and 7B are displaced differently. If the amount the applied liquid is not uniform or unsymmetrical along the coating width C due to inaccuracy of assmbling of the nozzle, the liquid may be dispensed by tilting the forming member 3 along the coating width C to optimize the gap t1.

For protecting a tape form of the object 9 to be coated from being urged and deflected by the nozzle 100, a backup roll may be used to support the object 9 from its back at a portion of the object receiving a stress from the nozzle 100. This arrangement, however, requires a linearity of the lip. A conventional extrusion type nozzle having plural mechanisms for modifying the lip along a coating width can be hardly used with the backup roll to allow the liquid to be applied uniformly for producing a smooth coating. Since including no mechanism for changing the shape of the lip 8, the nozzle 100 of Embodiment 1 can be used with the backup roll.

The forming member 3 preferably has a shape having a length L1 along a discharging direction B changing along the coating width C, as shown in Fig. 2. The amount of the applied liquid along the coating width C is determined by the length L1 along the discharging direction B and an inclining angle θ1 of the forming member 3 and the gap t1 of the slit 5. The length L1, the angle θ1, and the gap t1 may be optimized according to the viscosity of the liquid, thus allowing the liquid to be applied uniformly along the coating width C.

When the extrusion type nozzle 100 of Embodiment 1 applies various types of liquid having different viscosities, the nozzle may include the forming member 3 replaceable by another member for applying another type of liquid having a viscosity specified for the member. If the viscosity of the liquid is high, the angle θ1 of the forming member 3 is increased. When the viscosity of the liquid is low, the angle θ1 of the forming member 3 is decreased. If the types of the liquid do not have very different viscosities, the forming member 3 may be shifted by the displacing mechanism 7 for optimizing the gap t1 of the slit 5 to apply the types of the liquid uniformly, thus not requiring plural forming members 3 having their lengths L1 and angles θ1 slightly different from each other. According to the present embodiment, a small number of the forming members 3 enable the plural types of liquid having different viscosities to be applied uniformly and inexpensively.

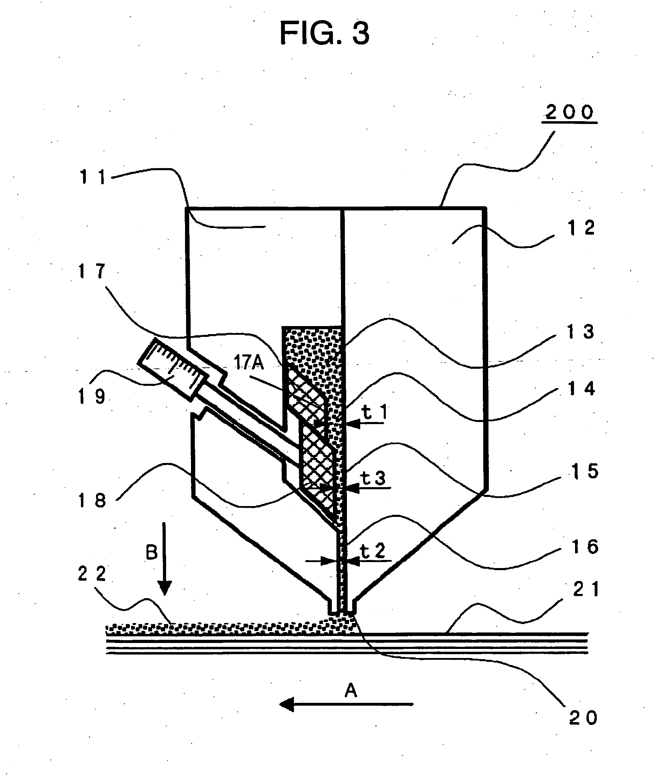

Fig. 3 is a cross sectional side view of a further extrusion type nozzle 200 according to Embodiment 1. The nozzle 200 includes main blocks 11 and 12, a manifold-side-slit-forming member 17 forms a wall 14A of a manifold-side slit 14 and provided at a side of a manifold 13, and an intermediate-slit-forming member 18 for changing a gap of an intermediate slit 15. The forming member 17 is arranged exchangeable and mounted to the main block 11. The forming member 18 is selected from members having shapes according to the viscosity of liquid. The forming member 18 is displaced by a displacing mechanism 19, and the member accordingly determine the gap t3 of the slit 15 between the manifold 13 and the lip 20.

The modified nozzle 200 includes the forming member 17 selectively exchanged according to the viscosity of the liquid, thus different types of the liquid uniformly without replacement of the forming member 18.

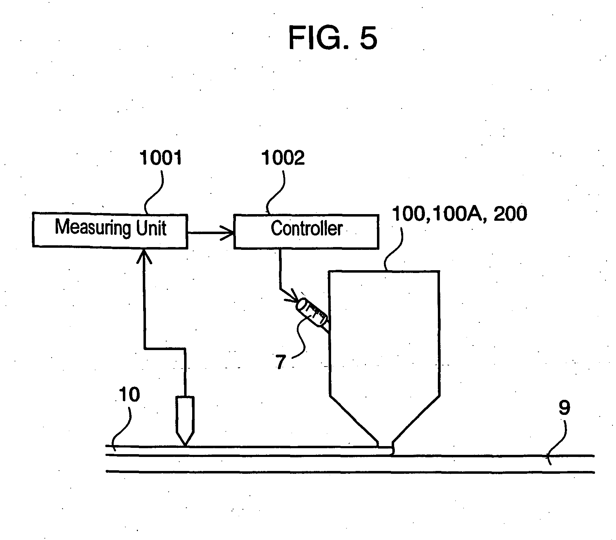

Fig. 5 is a block diagram of a coating apparatus according to Embodiment 1. The coating apparatus includes the extrusion type nozzle 100, a measuring unit 1001 for measuring a value of at least one of the weight, the thickness, and the density of a coating 10 at different points along the coating width C, and a controller 1002 for controlling an operation of the displacing mechanism 17 in response to the value measured by the measuring unit 1001. Even if the liquid varies with time in its viscosity, the nozzle can apply the liquid uniformly along the coating width C throughout the application direction A. The coating apparatus may include the nozzle 100A or 200 with equal effects.

### Exemplary Embodiment 2

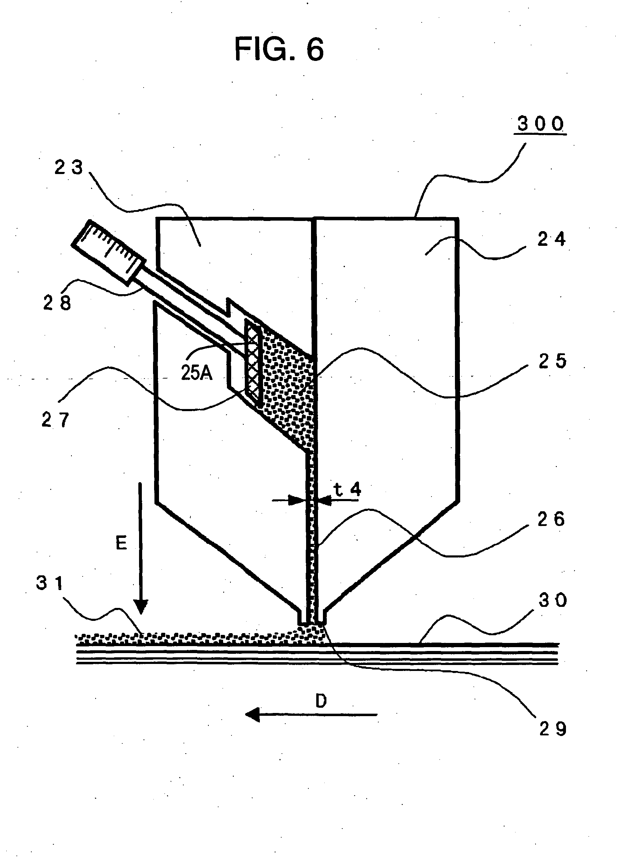

Fig. 6 is a cross sectional side view of an extrusion type nozzle 300 according to Exemplary Embodiment 2 of the present invention. The nozzle 300 includes main blocks 23 and 24 and a manifold-forming member 27. The forming member 27 forms a wall 25A of a manifold 25. A lip-side slit 26 is provided between the manifold 25 and a lip 29.

Liquid introduced into the nozzle 300 is pumped out at a constant speed by a pump, such as a quantitative pump for dispensing the liquid in the manifold 25 along a coating width C. The liquid is carried through the slit 26 from the manifold 25 and discharged on an object 30 to be coated where a resultant coating 31 is produced along an application direction D.

The nozzle 300 of Embodiment 2 includes a displacing mechanism 28 for displacing the forming member 27. The displacing mechanism 28 displaces the forming member 27 to change the area of a cross section of the manifold 25 perpendicular to the coating width. According to a change of the area of the cross section of the manifold 25, an amount of the liquid running through the manifold 25 varies due to a pressure loss along the coating width to optimize a distribution of the liquid along the coating width. The displacement of the forming member 27 is adjusted, and the liquid can be accordingly applied uniformly.

The nozzle 300 may include plural displacing mechanisms similar to displacing mechanisms 7A and 7B of the nozzle 100A shown in Fig. 4 for tilting the forming member 27 along the coating width. Even if the liquid is not applied symmetrically due to inaccuracy of a construction of the nozzle 300, the nozzle can correctly apply the liquid at a uniform distribution by changing the area of the cross section of the manifold 25 along the coating width similarly to that of the nozzle 100A.

The displacing mechanism 28 for displacing the forming member 27 may be implemented by a differential screw, a heat bolt, or a piezoelectric device, but is not limited to them.

The nozzle 300, similarly to the nozzle 100 of Embodiment 1 shown in Fig. 1, includes the lip 29 not deforming. Therefore, the nozzle 300, similarly to the nozzle 100 of Embodiment 1, is applicable to various coating apparatuses including a backup roll.

The nozzle 300 of Embodiment 2 may be used in a coating apparatus shown in Fig. 5 including a measuring unit 1001 and a controller 1002, and can provide the same effects as those of Embodiment 1.

### Exemplary Embodiment 3

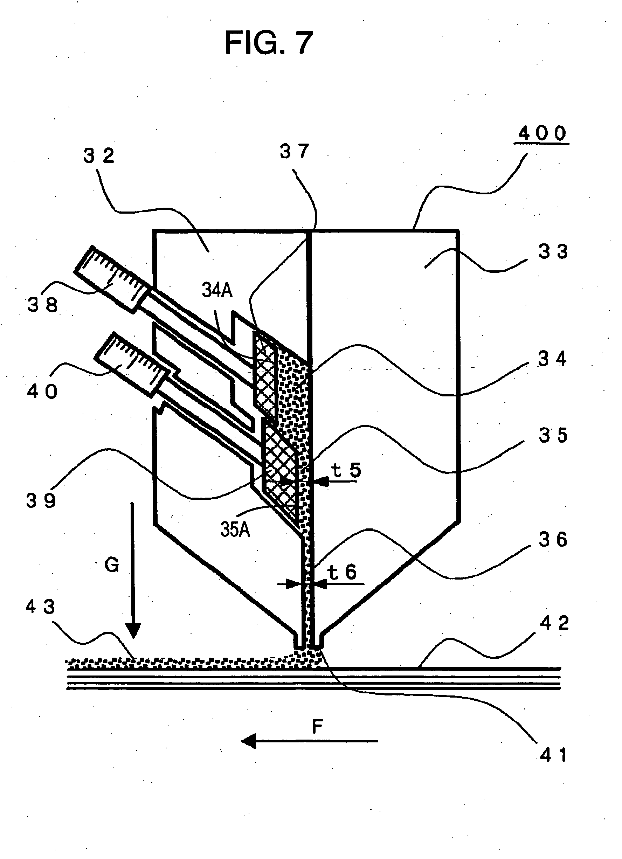

Fig. 7 is a cross sectional side view of an extrusion type nozzle 400 according to Exemplary Embodiment 3 of the present invention. The nozzle 400 includes main blocks 32 and 33, a manifold forming member 37, and a manifold-side-slit-forming member 39. The forming member 37 forms a wall 34A of a manifold 34 while the forming member 39 forms a wall 35A of a manifold-side slit 35. A lip-side slit 36 is provided between the manifold-side slit 35 and a lip 41.

Liquid introduced into the nozzle 400 is pumped out at a constant speed by a pump, such as a quantitative pump for dispensing the liquid in the manifold 34 along a coating width. The liquid is carried through the manifold-side slit 35 and the lip-side slit 36 and discharged on an object 42 to be coated where a resultant coating 43 is produced along an application direction F.

The extrusion type nozzle 400 includes a displacing mechanism 38 for displacing the forming member 37 and a displacing mechanism 40 for displacing the forming member 39. The displacement of the forming member 37 changes the area of the cross section of the manifold 34 perpendicular to the coating width J. This arrangement causes the amount of the liquid running through the manifold 34 to vary due to a pressure loss along the coating width J to optimize a distribution of the liquid along the coating width J. The displacement of the forming member 37 is adjusted, and the liquid can be accordingly applied uniformly.

The nozzle 400 may includes displacing mechanisms similar to displacing mechanisms 7A and 7B of the nozzle 100A shown in Fig. 4 for tilting the forming member 37 along the coating width J. Even if the liquid is not applied symmetrically due to inaccuracy of a construction of the nozzle 400, the nozzle can correctly apply the liquid at a uniform distribution by changing the area of the cross section of the manifold 34 along the coating width J similarly to that of the nozzle 100A.

The displacing mechanism for displacing the forming members 37 or 39 may be implemented by a differential screw, a heat bolt, or a piezoelectric device, but not limited to them.

The nozzle 400 similarly to the nozzle 100 of Embodiment 1 shown in Fig. 1, includes the lip 41 not deforming. Therefore, the nozzle 400, similarly to the nozzle 100 of Embodiment 1, is applicable to various coating apparatuses including a backup roll.

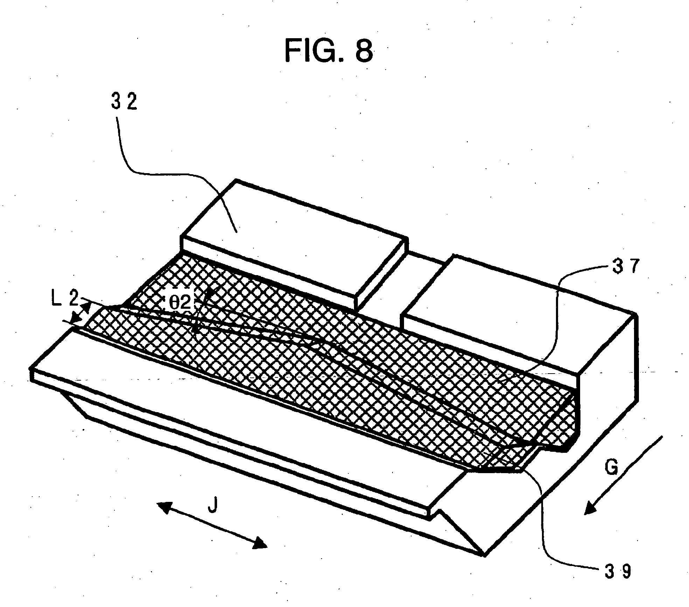

Fig. 8 is a perspective view of the main block 32 of the nozzle 400. The forming member 39 is arranged exchangeable, and preferably has a length L2 in a discharging direction G changing throughout the coating width J. The forming member 39, upon being combined with the main blocks 32 and 33 shown in Fig. 7, allows the length in the discharging direction G of the manifold-side slit 35 to vary along the coating width J. The amount of the applied liquid along the coating width J is determined by the length L2 in the discharging direction G of the forming member 39, an inclining angle θ2, and a gap t5 of an inlet-side slit 35. Therefore, the nozzle can apply the liquid along the coating width J uniformly when the length L2, the angle θ2, and the gap t5 are adjusted to its optimum values according to to the viscosity of the liquid.

The extrusion type nozzle 400 of Embodiment 3 may includes the forming member 39 arranged to be replaced by an alternative member having a shape optimum for the viscosity of the liquid if applying verious types of liquid having viscosities different from each other. If the viscosity of the liquid is high, the angle θ2 of the forming member 39 is increased. If the viscosity of the coating liquid is low, the angle θ2 of the forming member 39 is decreased. If the types of liquid do not have their viscosities not very different from each other, the liquid is applied uniformly by adjusting the gap t5 of the slit 35 with the displacing mechanism 40 of the forming member 39 and the area of the cross section of the manifold 34 with the displacing mechanism 38 of the forming member 37. In this case, a large number of the forming members 39 having their lengths L2 and the angles θ2 different from each other are not needed. According to the present embodiment, a small number of the forming members 39 enables plural types of the liquid having viscosities different from each other to be applied uniformly and inexpensively.

The nozzle 400 of Embodiment 3 may be used in a coating apparatus shown in Fig. 5 including a measuring instrument 1001 and a controller 1002 and can thus provide the same effects as that of Embodiment 1.

### (Example)

The extrusion type nozzles 100, 300, and 400 of Embodiments 1, 2, and 3 of the present invention produced coatings of Examples 1, 2, and 3 from different types of liquid on an object, respectively, and then, the thicknesses of the coatings were measured. A coating of Comparative Example was produced with a conventional extrusion type nozzle.

More specifically, the two different types A and B of liquid having different viscosities were applied for the coatings of Examples 1 to 3 and Comparative Example.

The type A of liquid was prepared by dispersing carbon particles in water solution of 1wt% carboxyl methyl cellulose. The liquid has a concentration of 50wt% of solids, a viscosity of 20Pa•s, at a shearing speed of 1s⁻¹, and a viscosity of 0.2Pa•s at a shearing speed of 1000s⁻¹.

The type B of liquid was prepared by dispersing carbon particles into water solution of 1wt% carboxyl methyl cellulose. The liquid has a concentration of 45wt% of solids, a viscosity 2Pa•s at a shearing speed of 1s⁻¹, and a viscosity of 0.1Pa•s at a shearing speed of 1000s⁻¹.

For producing the coatings of Examples 1 to 3 and Comparative example, the types A and B of the liquid were applied on aluminum foil having a thickness of 30µm at a speed of 10m/s to form a coating having a thickness of 0.2mm with the nozzles made of stainless steel having a coating width of 50mm. The resultant coatings were dried and measured in thickness along the coating width with a contact-type film thickness meter. The measurements of the thicknesses are shown in Table 1.

**Table 1**

| | | Shape of inside of Nozzle | | | | | | Variationof Thickness of Coating (%) |
|---|---|---|---|---|---|---|---|---|
| | Type of Liquid | Area of Cross Section of Manifold (mm²) | Manifold-Side Slit | | | Lip-Side Slit | | |
| | | | Length (mm) | Gap (mm) | Inclining Angle (deg.) | Length (mm) | Gap (mm) | |
| Example 1 | A | 700 | 20 | 2.0 | 5 | 40 | 0.5 | 1.9 |
| | B | 700 | 20 | 3.0 | 3 | 40 | 0.5 | 1.5 |
| Example 2 | A | 850 | - | - | - | 60 | 0.5 | 1.8 |
| | B | 750 | - - | - | - | 60 | 0.5 | 2.2 |
| Example 3 | A | 800 | 20 | 1.5 | 3 | 40 | 0.5 | 0.8 |
| | B | 600 | 20 | 2.0 | 3 | 40 | 0.5 | 0.6 |
| Comp. Example | A | 700 | - | - | - | 60 | 0.5 | 23.0 |
| | B | 700 | - | - | - | 60 | 0.5 | 6.0 |

The coating of Comparative Example produced with the conventional extrusion type nozzle has a variation of 6.0% of the thickness of the coating of the type B of the liquid along the coating width. The coating of the type A of the liquid A has as a large thickness variation of 23.0%. Since having a fixed shape, the conventional extrusion type nozzle produces a large variation of the thicknesses according to the types of the liquid.

The coating of the type A of Example 1, however, produces a variation of 1.9% of the thickness along the coating width. The type B of the liquid provides a variation of 1.5% of the thickness. It is shown that the types A and B physically different from each other can be applied uniformly with the single nozzle including the manifold-forming member arranged to be exchangeable inexpensively and the manifold slit having the adjustable gap.

The coating of the type A of Example 2 produces a variation of 1.8% of the thickness along the coating width. The coating of type B has a variation of 2.2% of the thickness. It is shown that the types A and B physically different from each other can be applied uniformly with the single nozzle having the manifold-forming member arranged to be displaceable for modifying the area of the cross section of the manifold to reduce a variation of the thickness of the coatings.

The coating of the type A of Example 3 produces a variation of 0.8% of the thickness along the coating width. The coating of the type B has a variation of 0.6% of its thickness. It is shown that the types A and B physically different from each other can be applied uniformly with the single nozzle including both the manifold-forming member and the manifold-slit-forming member arranged to be displaceable for adjusting the area of the cross section of the manifold and the gap of the manifold-side slit to reduce a variation of the thickness of the coating.

According to Example 3, the extrusion type nozzle was accompanied with an online film thickness meter for measuring the thickness of coatings and a controller for controlling the displacing mechanism in response to a measured thickness to constitute a coating apparatus shown in Fig. 5. The coating apparatus operated continuously for twelve hours to produce a coating of the type B of the liquid B. While having its viscosity decreased to 3/4 in twelve hours after starting, the nozzle produced the coating of the type B of liquid having a variation ranging from 0.5% to 0.9% of the thickness, thus producing a uniform coating. Similar coating apparatuses including the nozzles of Examples 1 and 2 also operated continuously for twelve hours and produced uniform coatings. A coating of the type B of liquid was produced by the conventional extrusion type nozzle of Comparative Example continuously for twelve hours. A variation of 6% of the thickness of the coating at the starting declined to a variation of 14% at twelve hours after due to a change with time of the viscosity of the type B of liquid.

## Claims

1. An extrusion type nozzle comprising:
a block having therein a manifold for distributing liquid along a coating width, a slit for allowing said liquid distributed in said manifold to pass therethrough, and a discharge outlet for discharging said liquid from said slit, said slit including a first portion and a second portion provided closer to said discharge outlet than said first portion; and
a first forming member for forming a wall of said first portion of said slit, said first forming member being displaceable to change a gap of said first portion of said slit.

2. The extrusion type nozzle according to claim 1, wherein said first forming member is exchangeable.

3. The extrusion type nozzle according to claim 1, wherein said first forming member has a length in a direction of discharging said liquid changing along said coating width.

4. The extrusion type nozzle according to claim 1, further comprising a displacing mechanism for tilting said first forming member along said coating width.

5. The extrusion type nozzle according to claim 1, wherein said slit further includes a third portion closer to said manifold than said first portion, said nozzle further comprising a second forming member for forming a wall of said third portion of said slit, and being exchangeable.

6. The extrusion type nozzle according to claim 1, further comprising a second forming member for forming a wall of said manifold, said second forming member being displaceable to change an area of a cross section of said manifold perpendicular to said coating width.

7. The extrusion type nozzle according to claim 6, further comprising a displacing mechanism for tilting said second forming member along said coating width.

8. An extrusion type nozzle comprising:
a block having therein a manifold for distributing liquid along a coating width, a slit for allowing said liquid distributed in said manifold to pass therethrough, and a discharge outlet for discharging said liquid from said slit; and
a forming member for forming a wall of said manifold, said forming member being displaceable to changing an area of a cross section of said manifold perpendicular to said coating width.

9. The extrusion type nozzle according to claim 8, further comprising a displacing mechanism for tilting said forming member along said coating width.

10. A coating apparatus comprising:
an extrusion type nozzle for producing a coating of liquid, including
a block having therein a manifold for distributing said liquid along a coating width, a slit for allowing said liquid distributed in said manifold to pass therethrough, and a discharge outlet for discharging said liquid from said slit, said slit including a first portion and a second portion provided closer to said discharge outlet than said first portion, and
a forming member for forming a wall of said first portion of said slit, said forming member being displaceable to change a gap of said first portion of said slit;
a measuring unit for measuring a value of at least one of a weight, a thickness, and a density of said coating; and
a controller for controlling an amount of displacement of said forming member of said extrusion type nozzle according to said measured value.

11. A coating apparatus comprising:
an extrusion type nozzle for producing a coating of liquid, including
a block having therein a manifold for distributing said liquid along a coating width, a slit for allowing said liquid distributed in said manifold to pass therethrough, and a discharge outlet for discharging said liquid from said slit, and
a forming member for forming a wall of said manifold, said forming member being displaceable to changing an area of a cross section of said manifold perpendicular to said coating width;
a measuring unit for measuring a value of at least one of a weight, a thickness, and a density of said coating; and
a controller for controlling an amount of displacement of said forming member of said extrusion type nozzle according to said measured value.
